# EUROPEAN PATENT APPLICATION

(11) **EP 1 788 207 A1**
(43) Date of publication of application: **23.05.2007**
(21) Application number: 05782275.1
(22) Date of filing: 08.09.2005
(51) Int. Cl.: F01N 3/02, B01D 53/94, B01D 46/42

(54) **EXHAUST GAS PURIFICATION DEVICE**

(30) Priority: 09.09.2004 JP 2004262311
(71) Applicant: Hino Motors, Ltd., Hino-shi, Tokyo 191-8660 (JP)
(72) Inventor: IGARASHI, Tatsuki, Hino Motors, Ltd., Hino-shi, Tokyo 1918660 (JP)
(74) Representative: Köhler, Walter
(86) International application number: PCT/JP2005/016502
(87) International publication number: WO 2006/028163

(57) **Abstract**

An exhaust emission control device is realized which causes no battery exhaustion nor deterioration in engine startability even when the forced regeneration using the electric heater is conducted in the engine stopping status.

Disclosed is an exhaust emission control device in which adopted as a filter body (7) for capturing particulates is a heat-regenerative particulate filter (10) with electric heater, the captured particulates being burned by heating of the electric heater (9) to forcedly regenerate the particulate filter (10). A control unit (37) responsible for a series of control operations with respect to the forced regeneration of the particulate filter (10) is constructed such that the forced regeneration in an engine stopping status is conduced only when the voltage of the battery (34) is higher than a stipulated value, and is temporarily interrupted when engine starting operation is conducted during the forced regeneration in the engine stopping status.

## Description

### Technical Field

The present invention relates to an exhaust emission control device which removes particulates from exhaust gas in an internal combustion engine such as a diesel engine.

### Background Art

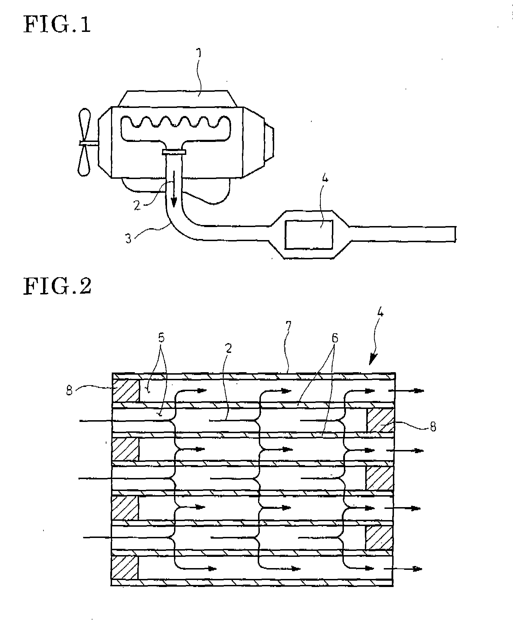

Particulate or particulate matter from a diesel engine is mainly constituted by carbonic soot and soluble organic fraction (SOF) of high-boiling hydrocarbon and contains a trace of sulfate (misty sulfuric acid fraction). In order to suppress such kind of particulates from being discharged to atmosphere, it has been envisaged as shown in Fig. 1 that a particulate filter 4 is incorporated in an exhaust pipe 3 through which exhaust gas 2 from a diesel engine 1 flows.

As shown in particular in Fig. 2, this particulate filter 4 comprises a porous honeycomb-structured filter body 7 made of ceramics such as cordierite and having lattice-like compartmentalized passages 5; alternate ones of the passages 5 have inlets plugged with plugs 8 and the remaining passages with unplugged open inlets are plugged at their outlets with the plugs 8. Thus, only the exhaust gas 2 passing through thin porous walls 6 compartmentalizing the respective passages 5 is discharged downstream, and particulates are captured on inner surfaces of the walls 6.

The particulates in the exhaust gas 2, which are captured and accumulated on the inner surfaces of the walls 6, are burned off through spontaneous combustion when operation is shifted to an area with high exhaust temperature level. However, for example in a vehicle such as a city shuttle-bus tending to travel on congested roads, an engine operation at or above a required, predetermined temperature level do not continue for a long period of time, so that a captured particle amount may exceed a treated particulate amount, resulting in clogging of the particulate filter 4.

To overcome this, it has been under review to provide an electric heater so as to satisfactorily burn off particulates even in an engine operation area with low exhaust temperature level. When heating is positively carried out by this kind of electric heater, the particulates can be burned off satisfactorily even in an engine operation area with low exhaust temperature level.

A heat-regenerative particulate filter provided with an electric heater has been proposed for example in the following Patent Reference 1 in the name of the applicant of the present invention.

However, in such conventional proposals using an electric heater, much electricity is consumed for regeneration of the particulate filter 4 so that required is a bulk power source which cannot be covered by an existing battery for vehicles; the consumed electricity must be compensated for by the corresponding electric charge, disadvantageously resulting in lowering of mileage. There is also a fear that harmful gas such as highly concentrated CO and HC may be generated and discharged to the atmosphere since the particulates are burned off at a relatively low temperature level upon regeneration of the particulate filter 4.

Then, the inventor devised and filed a prior application (Patent Reference 2 below) for an exhaust emission control device with a heat-regenerative particulate filter which is low in electric consumption and discharges no harmful gas into atmosphere.

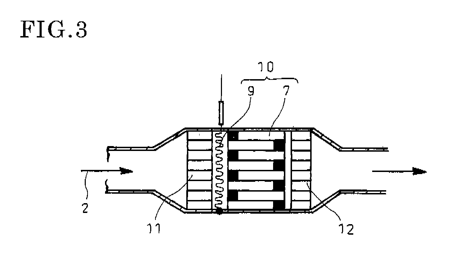

An underlying concept in the prior application is as shown in Fig. 3. A filter body 7 made of silicon carbide and with a same structure as that shown in the above with respect to Fig. 2 is provided at its front end with an electric heater 9 such as a sheathed heater to thereby provide a heat-regenerative particulate filter 10. Arranged frontward and backward of and in proximity to the particulate filter 10 are oxidation catalysts 11 and 12, respectively, so as to obtain heat-retention effect on the filter 10.

In such exhaust emission control device, the particulates captured by the filter body 7 can be effectively burned off through heating of the electric heater 9 even in an engine operation condition with low exhaust temperature level such as light-load operation; moreover, the heat-retention property of the front- and backward oxidation catalysts 11 and 12 causes the filter body 7 to be promptly elevated in temperature into a situation for easy burn-off of the particulates. As a result, the burn-off of the particulates can be completed in a shorter energization time period than usual, thereby attaining substantial reduction in electric consumption.

Harmful gas such as highly concentrated CO and HC generated from burning-off of the particulates through heating by the electric heater 9 at a relatively low temperature level can be oxidized into and discharged as harmless CO₂ and H₂O through its passage through the rearward oxidation catalyst 12, whereby the harmful gas can be preliminarily prevented from remaining in the exhaust gas 2 finally discharged to the atmosphere.

Passage of the exhaust gas 2 through the frontward oxidation catalyst 11 can convent NO, which occupies majority of NOₓ in the exhaust gas 2, into highly reactive NO₂. As a result, the oxidation reaction of the particulates can be substantially accelerated in the operational condition with relatively high exhaust temperature level, thereby facilitating spontaneous combustion of the particulates without heating by the electric heater 9, resulting in good burning-off.
[Reference 1] JP 62-255512A
[Reference 2] JP 2005-090450A

### Summary of the Invention

### Problems to be Solved by the Invention

Even if the heat-regenerative exhaust emission control device using the electric heater 9 may be put to practical use through the means illustrated above, it still an important issue that the forced regeneration of the particulate filter 10 can be properly conducted or not irrespective of the fact that engine is in motion or not especially in application to a vehicle having operation style with frequent engine stops such as a commercial vehicle used for parcel-delivery service or service of delivering goods to convenience stores. The forced regeneration using the electric heater 9 during the engine stopping status will burden the battery extremely greatly and may disadvantageously cause battery exhaustion or failure of engine starting during forced regeneration in the engine stopping status.

The invention was made in view of the above and has its object to provide an exhaust emission control device which causes no battery exhaustion nor deterioration in engine startability even if the forced regeneration using the electric heater is conducted during engine stopping status.

### Means or Measures for Solving the Problems

The invention is directed to an exhaust emission control device wherein employed is a heat-regenerative particulate filter comprising a filter body for capturing particulates and an electric heater, the captured particulates being burned by heating through the electric heater for forced regeneration of the particulate filter, characterized in that a control unit responsible for a series of control operations for forced regeneration of the particulate filter is constructed such that the forced regeneration in an engine stopping status is conducted only when voltage of a battery is higher than a stipulated value, and is temporarily interrupted when the engine starting operation is conducted in the engine stopping status.

Thus, when the battery voltage is lower than the stipulated value, the forced regeneration in the engine stopping status is not conduced nor continued by the control unit. As a result, there is no fear that battery exhaustion is caused due to electricity consumption by the electric heater in the engine stopping status.

When the engine starting operation is conducted during the forced regeneration in the engine stopping status, the forced regeneration is temporarily interrupted by the control unit. As a result, the forced regeneration and the engine starting operation which cause high electric burden are prevented from being conducted simultaneously in the engine stopping status, the engine starting operation being prioritized to cause the starting of the engine with no problem.

### Effects of the Invention

According to an exhaust emission control device of the invention mentioned above, the following excellent effect will be obtained. Forced regeneration of an particulate filter in engine stopping status is not conducted when voltage of a battery is lower than a stipulated value, and the forced regeneration is temporarily interrupted when an engine starting operation is conducted during the forced regeneration in the engine stopping status, so that battery exhaustion and deterioration in engine startability can be preliminarily prevented even when the forced regeneration of the particulate filter is conducted using the electric heater in the engine stopping status.

### Brief Description of the Drawings

[Fig. 1] A schematic view showing a conventional particulate filter arranged in position.
[Fig. 2] A sectional view showing details of the particulate filter in Fig. 1.
[Fig. 3] A sectional view showing an underlying concept in a prior application using electric heater.
[Fig. 4] An overall schematic view showing an embodiment of the invention.
[Fig. 5] A flowchart showing specific control procedures in a control unit of Fig. 4.

### Explanation of the Reference Numerals

7 filter body
9 electric heater
10 heat-regenerative particulate filter
34 battery
36 key switch
37 control unit

### Best Mode for Carrying Out the Invention

An embodiment of the invention will be described in conjunction with the drawings.

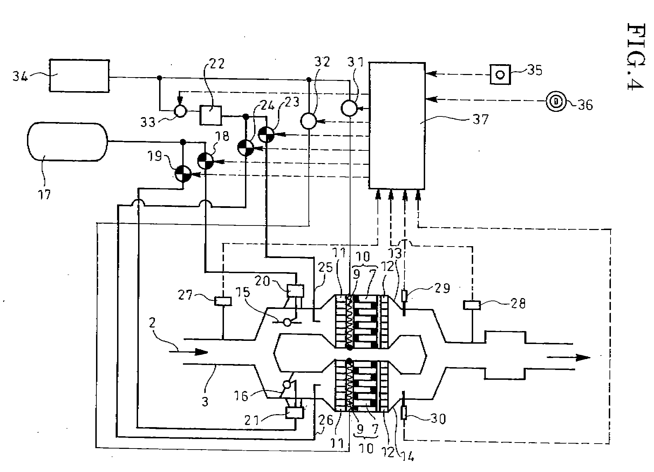

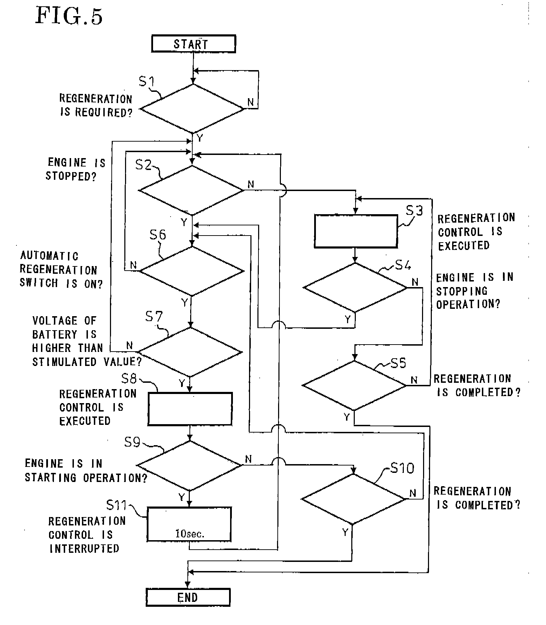

Figs. 4 and 5 show the embodiment of the invention in which parts similar to those shown in Figs. 1-3 are represented by the same reference numerals.

Shown in Figs. 4 and 5 is an illustration of an exhaust emission control device of the invention comprising an exhaust pipe 3 divided halfway into two passages in which filter casings 13 and 14 are arranged in parallel with each other and in pair, a heat-regenerative particulate filter 10 being accommodated in each of the filter casings 13 and 14.

The heat-regenerative particulate filter 10 illustrated is same as that shown in Fig. 3 and comprises a filter body 7 made from silicon carbide which is provided at its front end with an electric heater 9 such as a sheathed heater. Arranged in each of the filter casings 13 and 14 and front- and rearward of and in proximity to the particulate filter 10 are oxidation catalysts 11 and 12 for heat-retention effect on the particulate filter 10.

The front- and rearward oxidation catalysts 11 and 12 shown are flow-through type ones each comprising a honeycomb-structured carrier made of ceramics such as cordierite and carrying a proper amount of platinum; a volume and a carried platinum amount of the rearward oxidation catalyst 12 may be decreased than those of the frontward oxidation catalyst 11.

Each of the filter bodies 7 of the filter casings 13 and 14 may integrally carry an oxidation catalyst so as to accelerate the oxidation reaction of the particulates captured by the filter body 7.

Furthermore, exhaust shutters 15 and 16 are respectively arranged on inlet sides of the filter casings 13 and 14 so as to selectively direct the exhaust gas 2 flowing through the exhaust pipe 3 into either of the filter casings 13 and 14, the exhaust shutters 15 and 16 being adapted to be selectively opened and closed by air cylinders 20 and 21 which in turn are driven by pressurized air from an air tank 17 via electromagnetic valves 18 and 19, respectively.

Inserted and arranged just downstream of the exhaust shutters 15 and 16 are air induction pipes 25 and 26 which guide, via electromagnetic valves 23 and 24, combustion air taken in from atmosphere by driving an air pump 22 to inlets of the filter casings 13 and 14, respectively.

In the drawings, reference numerals 27 and 28 denote pressure sensors; 29 and 30, temperature sensors; 31 and 32, relays for the heaters; 33, a relay for the pump; 34, a battery; 35, an automatic regeneration switch; 36, a key switch; and 37, an electronic control unit (ECU) which serves also as an engine controlling computer. Inputted to the control unit 37 are detection signals from the pressure sensors 27 and 28 and temperature sensors 29 and 30 and on-off signals from the automatic regeneration switch 35 and key switch 36; outputted from the control unit 37 are control signals to the relays 31 and 32 for the heaters, relay 33 for the pump, electromagnetic valves 18, 19, 23 and 24. Thus, a series of control operations referred particularly to hereinafter are conducted for forced regeneration of the particulate filter 10.

For example, as shown in Fig. 4, when the running or driving is carried out with exhaust shutters 16 and 15 being respectively closed and opened for flow of the exhaust gas 2 only into the filter casing 13, NO occupying majority of NOₓ in the exhaust gas 2 flowing into the filter casing 13 is converted into highly reactive NO₂ upon passing of the exhaust gas 2 through the frontward oxidation catalyst 11, whereby the oxidation reaction of the particulates is substantially facilitated into sufficient burning-off in the operational condition with the exhaust temperature level at or above about 250°C. However, when a light-load operational condition with temperature level greatly falling below 250°C is continued for a long period of time, for example, during running or driving on congested city roads, satisfactory burn-off of the particulates cannot be expected.

To overcome this, when excess of an accumulated particulate amount in the filter body 7 in the filter casing 13 over a predetermined amount is estimated on the basis of the detected values of the pressure sensors 27 and 28 (estimation is based on pressure difference between the entering and discharge sides of the filter body 7), by the control unit 37 the valve 18 is opened to close the shutter 15 and the valve 19 is closed to open the shutter 16, whereby the exhaust gas 2 is bypassed to the other filter casing 14 into a situation that the filter body 7 in the filter casing 13 is not exposed to the flow of the exhaust gas 2; then, the contact point of the relay 31 for the heater is closed to energize and heat the electric heater 9 in the filter casing 13, whereby the filter body 7 in the filter casing 13 is positively heated.

When the exhaust temperature detected by the temperature sensor 29 reaches a predetermined value due to such positive heating of the filter body 7 by the electric heater 9, by the control unit 37 the relay 33 is closed to drive the air pump 22 and the valve 23 is opened to introduce the combustion air from the pump 22 into the inlet of the filter casing 13 via the pipe 25.

When the exhaust gas 2 is bypassed in this manner and the heating by the electric heater 9 is continued with the combustion air guided to the inlet of the filter casing 13, heat due to the electric heater 9 is effectively imparted to the filter body 7 without being robbed of by the exhaust gas 2, whereby the filter body 7 is effectively heated to promote the oxidization reaction of the particulates captured by the filter body 7, and oxidizing atmosphere around the filter body 7 is elevated for easy burn-off of the captured particulates.

In this case, the heat-regenerative particulate filter 10 is sandwiched and heat insulated by the front-and rearward oxidation catalysts 11 and 12 in one and the same filter casing 13, 14, so that the beginning of the oxidization reaction of the captured particulates causes the filter body 7 to be rapidly elevated in temperature, whereby the particulates have tendency of being more easily burned off; as a result, the particulates can be completely burned off with a time period of energization shorter than that they can conventionally, resulting in reduction of the electric power consumption in comparison with the prior art.

The harmful gas such as highly concentrated CO or HC generated due to burn-off of the particulates with relatively low temperature level by the heating of the electric heater 9 is oxidized into harmless CO₂ or H₂O during passage through the rearward oxidation catalyst 12 and is discharged.

In a course of operations for a long period after completion of the regeneration in the filter body 7 in the one filter casing 13, the accumulated particulate amount in the filter body 7 in the other filter casing 14 may be estimated to excess the predetermined amount; then, the regeneration of the filter body 7 with respect to the other filter casing 14 may be conducted in the same manner as the above.

More specifically, by the control unit 37 the valve 18 is closed to open the shutter 15 and the valve 19 is opened to close the shutter 16, whereby, in this time, the exhaust gas 2 is bypassed to the one filter casing 13. The relay 32 is closed to energize and heat the electric heater 9 in the filter casing 14 to positively heat the filter body 7 in the filter casing 14; thereafter, when the exhaust temperature detected by the temperature sensor 30 reaches a predetermined value, by the control unit 37 the contact point of the relay 33 is closed to drive the air pump 22 and the valve 24 is opened to introduce the combustion air from the pump 22 into the inlet of the filter casing 14 via the pipe 26.

The control unit 37 responsible for the series of control operations with respect to the forced regeneration of the particulate filter 10 as mentioned in detail in the above has a function that the forced regeneration in the engine stopping status is conducted only in the condition that the voltage of the battery 34 is higher than the prescribed value, and the forced regeneration is temporarily interrupted when engine starting operation is conducted by turning on the key switch 36 during the forced regeneration in the engine stopping status.

More specifically, specific control procedures in the control unit 37 with respect to the above-mentioned stop and interruption of the forced regeneration in the engine stopping status are as shown in the flowchart of Fig. 5. Firstly, in step S1, it is determined whether the forced regeneration of the particulate filter 10 is required or not. The determination is repeated until determination results is affirmative on necessity of the forced regeneration.

For the determination whether the forced regeneration is required or not, an accumulated particle amount in the filter body 7 is estimated on the basis of detected values of the pressure sensors 27 and 28 (pressure difference between inlet and outlet sides of the filter body 7: pressure loss); when the estimated value exceeds a predetermined value, then it is determined that the forced regeneration is required. As mentioned below, the accumulated particle amount may be alternatively estimated from the operational condition of the engine.

The control unit 37 in the embodiment serves also as an engine control computer and is responsive also to fuel injection control to respective cylinders based on engine revolution and accelerator stepped-in degree, so that the fuel injection amount which is evident as of decision of the fuel injection control is extracted to estimate a basic particulate generation amount in the current engine-operating state depending upon such injection amount and revolution, using a particulate generation amount map. Then, the basic, estimated particulate generation amount is multiplied by a correction factor applied in consideration of various parameters on generation of the particulates and then a treated particle amount in the current engine operating state is subtracted therefrom to determine a captured particle amount in the particulate filter 10. Such captured amount is momentarily submitted to a cumulative computation to estimate an accumulated particulate amount.

There have been various concepts for estimating such accumulated particulate amount; other methods than is illustrated above may be, of course, employed for estimation of the accumulated particulate amount.

When it is determined in step S1 that the forced regeneration of the particulate filter 10 is required, the routine proceeds to step S2 where it is determined whether the engine is in stopping status or not; when the engine is in motion, the routine proceeds to step S3 where conducted are a series of control operations with respect to the forced regeneration (switch-on and temperature control of one of the electric heaters 9, switch-on of the air pump 22, passage changeover by the exhaust shutters 15 and 16, changeover on where combustion air is to be introduced, and the like).

After the forced regeneration is conducted in step S3, it is monitored in step S4 whether the engine stopping operation of switching off the key switch 36 is conducted or not during the forced regeneration. When the forced regeneration is continued with no engine stopping operation, the flow proceeds to step S5 where it is determined whether the regeneration of the particulate filter 10 (burn-off of the captured particulates) is completed or not. When it is determined to be completed, then the series of control operations with respect to the forced regeneration are ended. While it is not determined that the regeneration of the particulate filter 10 is completed, the procedures from step S3 are repeated.

As to the determination whether or not the regeneration of the particulate filter 10 is completed in step S5, for example, it is monitored how many minutes the condition of the measured value of the temperature sensor 29 or 30 exceeding a predetermined value is continued; when a total of the minutes determined exceeds a predetermined period of time enough for burn-off of the estimated accumulated particulate amount, it may be determined to be completed.

Alternatively, a treated or burn-off particulate amount per unit time may be estimated on the basis of the measured value of the temperature sensor 29 or 30, such treated or burn-off amount being submitted to a cumulative computation whenever unit time elapses; then, the completion is determined when the estimated, accumulated particulate amount in the particulate filter 10 is equal to the cumulated value of the treated or burn-off particulate amount.

When the engine stopping operation is conducted during the forced regeneration in step S4, the routine proceeds to step S6 where it is ascertained whether the automatic regeneration switch 35 is on-state or not; when the switch 35 is not on-state, the procedures from step S2 are repeated.

The automatic regeneration switch 35 is a switch through which a driver can freely interrupt the forced regeneration by his/her will in a case where automatic execution of the forced regeneration in the engine stopping status is to be averted (for example, in indoor parking).

When on-state of the automatic regeneration switch 35 is ascertained in step S6, it is determined in step S7 whether the voltage of the battery 34 is higher than a stipulated value or not; only when the voltage of the battery 34 is determined to be higher than the stimulated value, the routine proceeds to step 58 where the series of control operations with respect to the forced regeneration are conducted.

When the voltage is the battery 34 is lower than the stipulated value, then routine returns from step S7 to step S2 where repeated is the determination whether the engine is in stopping status or not; it is actually a status of awaiting the engine starting operation for procession to step S3.

After the forced regeneration is conducted in step S8, it is monitored in step S9 whether the engine starting operation of switching on the key switch 36 is conducted or not during the forced regeneration. In a case where the forced regeneration is continued without the engine starting operation, the routine proceeds to step S10 where it is determined whether the regeneration of the particulate filter 10 (burn-off of the captured particulates) is completed or not; when the completion is determined, the series of control operations with respect to the forced regeneration are ended; while it is not determined that the regeneration of the particulate filter 10 is completed, the procedures from step S6 are repeated. The description on the determination of the regeneration of the particulate filter 10 being completed is omitted since it is the same as that disclosed with respect to step S5.

When the engine starting operation is conducted during the forced regeneration in step 9, the routine proceeds to step S11 where the forced regeneration is temporarily interrupted for about 10 seconds or so, thereafter the routine returns to step S2 where the similar procedures are repeated.

More specifically, normally, the engine will start through the engine starting operation within the interruption time of about 10 seconds or so, so that, after the engine starting operation is ascertained in step S2, the routine proceeds to step S3 where the forced regeneration is conducted in the engine operating status.

By controlling the forced regeneration of the particulate filter 10 through the control unit 37 as mentioned above, the forced regeneration in the engine stopping status is not conducted (continued) by the control unit 37 when the voltage of the battery 34 is lower than the stipulated value, thereby preliminarily preventing the battery exhaustion through electric consumption of the electric heater 9 in the engine stopping status; moreover, when the engine starting operation of switching on the key switch 36 is conducted during the forced regeneration in the engine stopping status, the forced regeneration is temporarily interrupted by the control unit 37. As a result, the forced regeneration using the electric heater 9 and the engine starting operation which cause high electric burden are prevented from being conducted simultaneously in the engine stopping status, the engine starting operation being prioritized to cause the starting of the engine with no problem.

Thus, according to the above-mentioned embodiment, the forced regeneration is not conducted in the condition that the voltage of the battery 34 is lower than a stipulated value. Moreover, the forced regeneration is temporarily interrupted when the engine starting operation is conducted during the forced regeneration in the engine stopping status. As a result, battery exhaustion and deterioration in engine startability can be preliminarily prevented even when the forced regeneration of the particulate filter 10 is conducted using the electric burner 9 in the engine stopping status.

It is to be understood that the exhaust emission control device according to the invention is not limited to the above-mentioned embodiment and that various changes and modifications may be made without leaving the spirit of the invention. For example, heat-regenerative particulate filters may not be in parallel with each other and in pair; for example, they may be replaced by providing a single heating type particulate filter and a bypass passage bypassing the same. The filter body may not carry an oxidation catalyst. The filter body may not be of a shape shown in the figures. The electric heaters may be fitted to the filter bodies in a manner different from that shown in the figures. The engine starting operation may not be limited to switch-on of key switch.

## Claims

1. An exhaust emission control device wherein employed is a heat-regenerative particulate filter (10) comprising a filter body (7) for capturing particulates and an electric heater (9), the captured particulates being burned by heating through the electric heater (9) for forced regeneration of the particulate filter (10), comprising a control unit (37) responsible for a series of control operations for forced regeneration of the particulate filter (10) being constructed such that the forced regeneration in an engine stopping status is conducted only when voltage of a battery (34) is higher than a stipulated value, and is temporarily interrupted when the engine starting operation is conducted in the engine stopping status.
